# FASCICULE DE BREVET EUROPEEN

(11) **EP 2 435 680 B1**
(45) Date de publication et mention de la délivrance du brevet: **05.07.2017**
(21) Numéro de dépôt: 10728807.8
(22) Date de dépôt: 21.05.2010
(51) Int. Cl.: F02C 7/14, F02C 7/18, F02K 3/072

(54) **DISPOSITIF DE REFROIDISSEMENT DE FLUIDES POUR PROPULSEUR À TURBOMACHINE**
FLUID-KÜHLEINRICHTUNG FÜR EINE GASTURBINENMOTOR ANTRIEBSGERÄT
FLUID-COOLING DEVICE FOR A TURBINE ENGINE PROPULSIVE UNIT

(30) Priorité: 27.05.2009 FR 0953483
(43) Date de publication de la demande: 04.04.2012
(73) Titulaire: Airbus Operations (S.A.S.), 31060 Toulouse (FR); Airbus Operations GmbH, 21129 Hamburg (DE)
(72) Inventeur: BULIN, Guillaume, F-31700 Blagnac (FR); STOLTE, Ralf-Henning, 22525 Hamburg (DE)
(74) Mandataire: Gicquel, Olivier Yves Gérard
(86) Numéro de dépôt international: PCT/FR2010/050996
(87) Numéro de publication internationale: WO 2010/136710

(56) Documents cités:
- EP-A1- 1 018 468
- FR-A1- 2 902 831
- GB-A- 750 200
- US-A- 4 601 202
- US-A- 4 999 994
- US-A- 5 269 135

## Description

La présente invention relève du domaine des équipements aéronautiques. Elle concerne plus spécifiquement les systèmes de dissipation thermique, et encore plus particulièrement les dissipateurs thermiques pour propulseurs d'aéronefs de type à turbomachine.

Un grand nombre de propulseurs d'aéronefs comportent une turbomachine, c'est par exemple le cas des propulseurs de type "propfan" pour lesquels cette turbomachine entraîne deux rotors contrarotatifs.

Dans ces propulseurs, une boite de vitesse (engrenage entre l'axe de la turbomachine et les rotors) transmet l'énergie mécanique générée par la turbomachine vers les rotors.

Bien que dotée d'un rendement très élevé, cette boîte de vitesse dissipe en chaleur par friction une partie de l'énergie créée par le propulseur. Cette chaleur est en particulier transmise au liquide de lubrification de la boîte de vitesse.

Par ailleurs, la turbomachine elle-même génère une forte dissipation thermique majoritairement par friction mécanique, également au travers de son liquide de lubrification.

On comprend que cette chaleur doit être dissipée vers l'environnement extérieur pour refroidir le propfan.

Diverses solutions ont été développées pour procéder à ce refroidissement. Ainsi :
- Le document de brevet des Etats-Unis publié sous la référence US 4,999,994 décrit un dispositif de refroidissement pour un turbopropulseur qui prélève de l'air à l'extérieur du propulseur et qui le dirige à travers une conduite forcée sur un échangeur thermique le dispositif est équipé d'un compresseur directement monté sur l'arbre moteur qui force la circulation d'air à travers l'échangieur thermique.
- La demande de brevet européen publiée sous la référence EP 1018468 décrit un dispositif de refroidissement pour un turbopropulseur qui comprend principalement une entrée alimentant une conduite d'amenée d'air débouchant sur un radiateur traversé par le lubrifiant à refroidir. L'air est ensuite dégagé par une conduite d'évacuation débouchant dans la tuyère de la turbomachine. Un volet et un éjecteur/mélangeur permet, en injectant dans la conduite d'évacuation de l'air comprimé capté au niveau du compresseur, de ralentir ou d'accélérer le débit d'air dans le dispositif et de contrôler l'échange thermique entre le fluide lubrifiant et l'air.
- Le document de brevet anglais publié sous la référence GB 750,200, décrit un dispositif de refroidissement pour un turbopropulseur qui prélève de l'air surpressé au niveau d'un étage intermédiaire donné de la soufflante. L'air est conduit par un passage annulaire à travers un échangeur thermique puis rejeté latéralement à l'extérieur du propulseur.
- Le document de brevet des Etats-Unis publié sous la référence US 4,601,202 décrit un dispositif de refroidissement d'un composant dans un moteur à turbine à gaz, et, en particulier, d'un élément de commande électronique du moteur. Le dispositif comprend un boîtier dans lequel est monté l'élément de commande le boitier comportant une pluralité d'ailettes d'échange thermique s'étendant vers l'extérieur de celui-ci. Le boîtier est monté dans le moteur en amont du compresseur de la turbine sur une structure avant présentant une ouverture à travers laquelle passent les ailettes du boitier. La structure avant définissant une voie d'entrée d'air vers le compresseur l'échange thermique entre le boitier et l'air frais est réalisé à travers les ailettes d'échange thermique qui s'étendent dans la voie d'entrée d'air de telle façon qu'elles n'affectent pas l'aérodynamisme de la circulation d'air dans le moteur.
- Le document de brevet des Etats-Unis publié sous la référence US 5,269,135 décrit un dispositif de refroidissement pour un turbopropulseur qui prélève de l'air à relativement haute pression capté derrière la soufflante et fait passer cet air au travers d'un échangeur de chaleur localisé dans une conduite forcée à l'intérieur de la nacelle, l'air avant traversé l'échangeur étant dirigé vers l'arrière du propulseur.

Ces diverses solutions présentent toutes des inconvénients important parmi lesquels on peut citer le fait que, pour être efficaces en termes d'échanges thermiques elles induisent soit une surconsommation en carburant, soit des pertes de charge, soit des perturbations aérodynamique du flux d'air.

Une autre solution, proche de l'état de l'art des turbofans (voir par exemple la demande de brevet FR2006/0052654), consiste à prélever de l'air sur un étage de compresseur (basse pression pour ne pas avoir de trop hautes températures), à positionner un échangeur air/huile dans cet écoulement d'air, à positionner une vanne de régulation d'air, et à faire sortir l'air tangentiellement à la surface extérieure de la nacelle pour récupérer une partie de la poussée. Sur les points de dimensionnement thermique (sol jour chaud par exemple), la vanne est totalement ouverte et malgré le fait que l'avion soit immobile, l'échangeur à air est alimenté. En vol, pour limiter l'impact performance, la vanne à air est partiellement ouverte afin d'adapter le débit d'air. Les inconvénients majeurs de cette solution sont :
- Impact significatif sur la performance du moteur du fait du prélèvement d'air (il faut dimensionner la turbomachine en considérant cette perte de débit)
- Impact acoustique de l'éjection de l'air en amont des hélices et sur une position discrète (non annulaire)
- Distortion de l'écoulement aérodynamique externe de la nacelle, pouvant entrainer une réduction de l'efficacité des hélices.

L'objectif de cette invention est alors de proposer un dispositif de refroidissement de turbomachine qui pallie aux inconvénients précités en assurant un niveau de refroidissement suffisant au sol et en vol tout en limitant l'impact aérodyanmique pendant les phases de vol.

Un second objectif de l'invention est d'utiliser un volume réduit, l'invention devant être particulièrement utilisée au sein d'une nacelle de propulseur.

A cet effet, l'invention vise un dispositif de refroidissement de fluides pour propulseur d'aéronef de type dit "propfan", ledit propulseur comportant une turbomachine entraînant en rotation au moins un rotor, ladite turbomachine étant alimentée en air extérieur par une entrée d'air, ladite turbomachine comportant un compresseur à au moins deux étages, et générant lors de son fonctionnement un échauffement d'un fluide de lubrification,
ledit dispositif de refroidissement de fluides comportant une prise d'air pressurisé, une veine d'air apte à conduire l'air pressurisé vers un refroidisseur volumique / surfacique, des moyens de conduire la chaleur du fluide de lubrification vers le refroidisseur volumique / surfacique,
ledit refroidisseur volumique / surfacique comportant :
d'une part, un corps matriciel équipé d'une pluralité de conduits pour agent de refroidissement, lesquels conduits s'étendent d'une première surface, dite interne, jusqu'à une seconde surface, dite externe, du corps matriciel, de telle sorte que le corps matriciel puisse être traversé par l'air pressurisé agissant comme un agent de refroidissement,
et, d'autre part, un ensemble d'ailettes s'étendant à partir de la surface externe du corps matriciel vers l'extérieur du propulseur, et orientées principalement parallèlement au sens d'écoulement de l'air lorsque l'aéronef est en vol.

En d'autres termes, le refroidisseur volumique / surfacique travaille selon deux modes possibles : d'une part en échangeur de chaleur volumique, en offrant une très grande surface de contact à l'agent de refroidissement, au sein des conduits du corps matriciel, d'autre part, en échangeur de chaleur surfacique, grâce aux ailettes.

Dans ce cas, préférentiellement, le corps matriciel est dimensionné de manière à suffire à assurer seul le refroidissement souhaité lorsque l'aéronef est à vitesse nulle ou faible, dans des conditions d'environnement préalablement choisies, et les ailettes sont dimensionnées de manière à suffire à assurer seules le refroidissement souhaité lorsque l'aéronef est en vol, dans des conditions d'environnement et de vitesse préalablement choisies.

Ces ailettes assurent deux fonctions.

En effet, le refroidisseur travaille, au niveau de ces ailettes, comme un échangeur de chaleur surfacique, au contraire de son fonctionnement par sa partie comportant un corps matriciel traversé d'un grand nombre de conduits.

D'autre part,, ces ailettes contribuent à assurer une protection du corps matriciel du refroidisseur contre des impacts d'objets.

Préférentiellement, le corps matriciel du refroidisseur forme une partie du revêtement externe du propulseur.

En effet, cette disposition permet de s'affranchir de la nécessité d'une veine d'air de sortie du corps matriciel, et réduit ainsi l'encombrement du dispositif. Par ailleurs, il est connu que l'écoulement d'air en vol, perpendiculaire aux conduits du corps matriciel, est peu perturbé par la surface externe de ce corps matriciel. La perte de charge engendrée est faible, au regard de la simplification apportée.

Selon une mise en oeuvre avantageuse, la prise d'air compressé est disposée en aval du 1^{er} ou du 2^{nd} étage du compresseur d'air.

Alternativement, le dispositif de refroidissement comprend une entrée d'air additionnelle disposée sensiblement à l'avant du propulseur.

Ces dispositions permettent de fournir une source d'air pressurisé, à température ambiante, cet air devant absorber la chaleur en excès dans les fluides de lubrification de la turbomachine.

Selon diverses dispositions éventuellement mises en oeuvre conjointement :
- le corps matriciel comporte une pluralité de lamelles délimitant les conduits,
- les conduits du corps matriciel sont orientés sensiblement perpendiculairement à la surface externe du corps matriciel.

De manière à piloter le mode de refroidissement, le dispositif de refroidissement comporte des moyens de contrôler le flux d'air compressé traversant les conduits du corps matriciel du refroidisseur.

Le but ici est de permettre le pilotage du refroidisseur entre son mode d'échange de chaleur volumique, et son mode d'échange de chaleur surfacique.

L'invention vise également un aéronef comportant un dispositif tel qu'exposé.

L'invention vise sous un second aspect un procédé destiné à l'utilisation d'un dispositif tel qu'exposé, ledit procédé comportant des opérations, lorsque l'aéronef est au sol, de commande de passage d'un flux d'air compressé maximum à travers le refroidisseur, et, lorsque l'aéronef est en vol, de commande de passage d'un flux d'air réduit ou nul à travers les conduits du corps matriciel du refroidisseur.

La description qui va suivre, donnée uniquement à titre d'exemple d'un mode de réalisation de l'invention, est faite en se référant aux figures annexées dans lesquelles :
la figure 1 montre un propulseur de type dit "Propfan", auquel l'invention peut être appliquée,
la figure 2 illustre en vue en coupe très schématisée un tel propulseur,
la figure 3 est une vue de détail de la figure 2, centrée sur la partie avant du propulseur, et qui met en évidence les éléments principaux du dispositif selon l'invention,
la figure 4 illustre une vue de détail d'un refroidisseur volumique / surfacique utilisé dans l'invention,
la figure 5 illustre de façon schématique les données traitées par l'électronique de contrôle du dispositif de refroidissement selon l'invention,
la figure 6 illustre le fonctionnement du dispositif de refroidissement selon l'invention lorsque l'aéronef est au sol,
la figure 7 illustre alors sur une vue de détail la circulation de l'air dans le refroidisseur dans ce mode de fonctionnement,
la figure 8 illustre de même le fonctionnement du dispositif de refroidissement selon l'invention lorsque l'aéronef est en vol,
la figure 9 illustre alors sur une vue de détail la circulation de l'air dans le refroidisseur dans ce mode de fonctionnement.

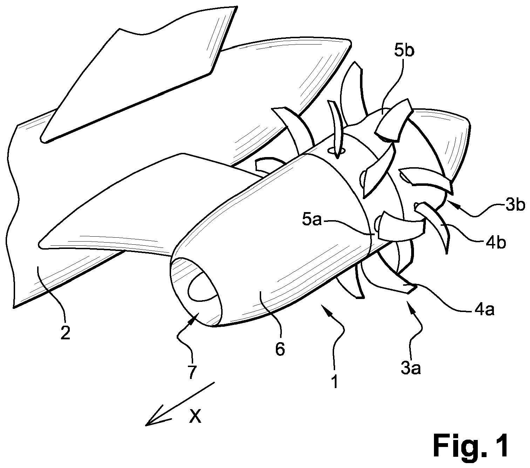

L'invention est destinée à être utilisée dans un propulseur 1 d'avion, par exemple de type dit "propfan", tel qu'illustré figure 1. De tels propulseurs sont envisagés pour des aéronefs futurs. Dans l'exemple de mise en oeuvre illustré ici, deux propulseurs propfan 1 sont fixés, par des mats de support, de part et d'autre de la partie arrière du fuselage 2 d'un aéronef.

Chaque propulseur propfan 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont la surface externe se place dans la continuité de l'enveloppe extérieure 6 du propulseur.

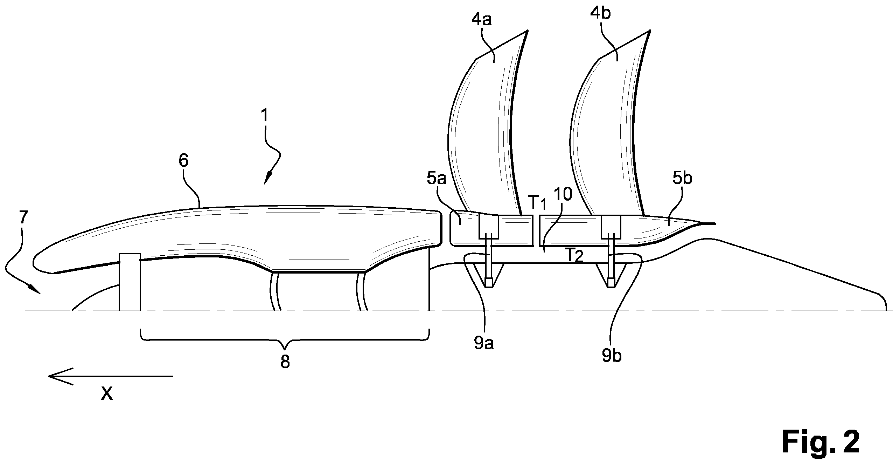

Comme on le voit sur la figure 2 de façon schématique, le propulseur propfan 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 10 dont la sortie est située à l'arrière des deux rotors 3a, 3b. Dans une variante, ces gaz peuvent également être évacués en amont des deux rotors.

Les détails de réalisation des propfan et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Lors du vol de l'aéronef, l'air extérieur, dont la température est comprise entre +30°C à proximité immédiate du sol et -50°C en altitude, vient circuler le long du revêtement externe du propulseur, sensiblement selon la direction opposée à l'axe longitudinal X de déplacement de l'aéronef.

Dans le même temps, le propulseur génère une réjections thermique significative, dont une partie est évacuée par la veine chaude annulaire 10, et une autre partie, transmise aux circuits d'huile du moteur et de la boîte de vitesse, doit être évacuée par un dispositif de refroidissement ad hoc.

La turbomachine 8 comporte, de façon classique, un compresseur à plusieurs étages permettant des augmentations incrémentales de pression de l'air entrant dans la turbomachine.

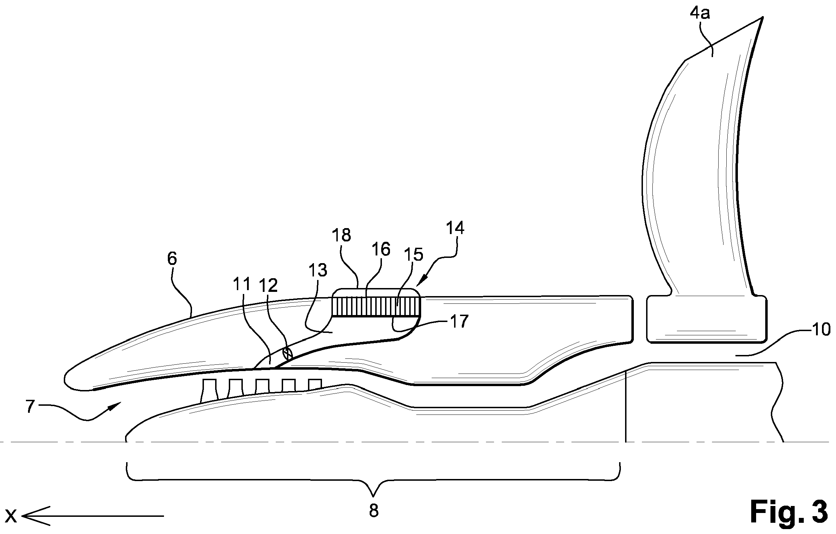

Le dispositif de refroidissement selon l'invention tire parti de la présence de ce compresseur, et comporte alors une prise d'air 11, de type connu en soi, disposée, dans le présent exemple non limitatif, en aval du second étage du compresseur de la turbomachine 8, comme on le voit sur la figure 3. Cette disposition est destinée à fournir un air déjà suffisamment pressurisé (de 1.5 à 2.5 bars relatifs), mais encore peu réchauffé par la compression, au contraire de l'air situé au niveau des étages suivants du compresseur.

La position du point de prélèvement dépend naturellement des caractéristiques spécifiques de la turbomachine 8 considérée, et de son compresseur, mais cette position est dictée par le besoin d'air à une pression suffisante pour amener un flux d'air prédéterminé vers un refroidisseur, et à une température suffisamment basse, tout en ne perturbant pas le fonctionnement correct du compresseur et plus généralement de la turbomachine 8.

Cette prise d'air 11 comporte une vanne de régulation 12, ici illustrée de façon schématique, adaptée à piloter le flux d'air pressurisé, prélevé au niveau de la prise d'air 11, entre une valeur quasiment nulle et une valeur maximale déterminée en fonction du besoin de refroidissement de l'huile de la boîte de vitesse et / ou du moteur.

Une veine d'air 13 disposée en aval de la vanne de régulation 12 conduit le flux d'air pressurisé prélevé vers un refroidisseur volumique / surfacique 14.

Ce refroidisseur volumique / surfacique 14 est destiné à fonctionner dans deux modes d'échange de chaleur principaux : 1/ l'un au sol, ou au décollage, lorsque le flux d'air extérieur est faible ou nul, et qu'un échange de chaleur réalisé sur une très grande surface ménagée dans un volume faible (l'échange est dit par abus de langage volumique) est préférable, 2/ l'autre en vol, lorsque le flux d'air extérieur est significatif et permet un échange de chaleur sur une surface faible (l'échange étant alors dit surfacique).

Ce refroidisseur volumique / surfacique 14 est par exemple du type décrit dans la demande de brevet allemande Airbus Deutschland n°10 2009 013 159.0 déposée le 16/03/2009, non encore publiée, et incorporée ici à la présente description par référence.

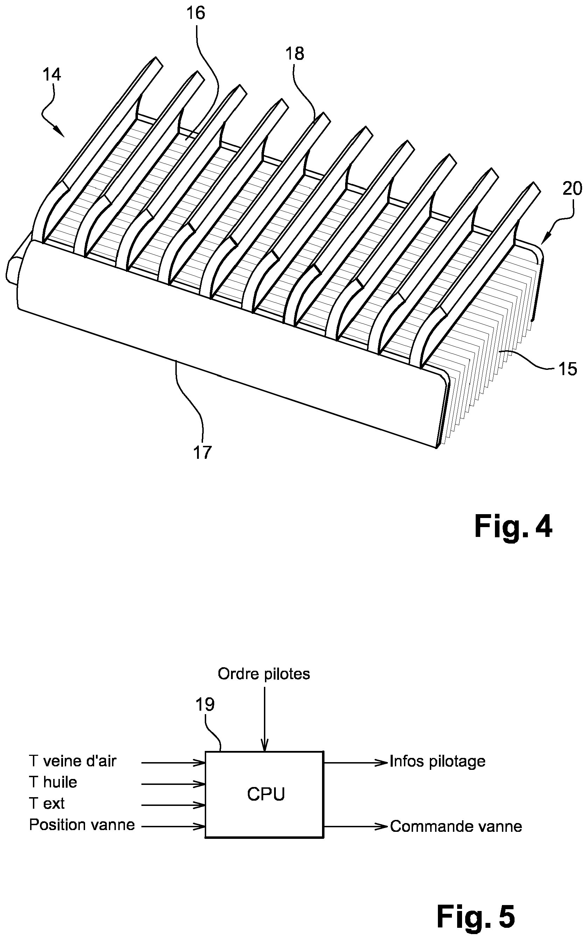

Conformément à cette demande, résumée ici à titre de clarification, le refroidisseur volumique / surfacique 14 comprend (figure 4), en premier lieu, un corps matriciel 15, dans lequel ont été ménagés un ensemble de conduits 20 pour le passage de l'agent de refroidissement, ici l'air pressurisé amené par la vanne d'air 13.

Ce corps matriciel 15 est par exemple constitué de lamelles assemblées, qui délimitent ainsi les conduits 20 de passage de l'air pressurisé.

Le corps matriciel 15 est réalisé dans un matériau très bon conducteur thermique, par exemple un alliage métallique, ou un matériau composite adapté à cet usage.

Le corps matriciel 15 sert de caloporteur entre le fluide à refroidir (huile de lubrification de la boîte de vitesse dans le cas présent) et l'air pressurisé à température proche de la température ambiante. Dans le présent exemple nullement limitatif, le corps matriciel 15 comporte un ensemble de tubes (non illustrés sur les figures) noyés dans son volume et dans lesquels circule le fluide à refroidir.

Dans le cas où on souhaite refroidir simultanément plusieurs fluides, divers réseaux de tubes sont, de manière connue, ménagés dans le volume du corps matriciel 15.

Le corps matriciel 15 est disposé, dans le présent exemple, de telle sorte que sa surface externe 16 vienne dans le prolongement de la surface externe 6 de la nacelle du propulseur, en remplaçant localement cette surface externe 6. Le corps matriciel 15 du refroidisseur forme ainsi une partie du revêtement externe du propulseur. La forme du corps matriciel est donc ici globalement cylindrique, et en tout cas déterminée par la forme de la surface externe de la nacelle du propulseur à l'endroit où le corps matriciel doit être installé. Le corps matriciel 15 est ici de forme sensiblement rectangulaire, arqué pour épouser le profil de la surface 6 de la nacelle du propulseur.

La surface interne 17 du corps matriciel est, dans le présent exemple, sensiblement parallèle à sa surface externe 16, la longueur des conduits 20 étant alors quasiment constante, et égale dans le présent exemple à la distance entre ces surfaces interne 17 et externe 16, si les conduits 20 sont perpendiculaires à ces surfaces.

Les dimensions du corps matriciel 15 sont déterminées par le besoin de refroidissement lorsque l'avion est au sol ou à faible vitesse, par le flux d'air pressurisé froid disponible, et par la surface d'échange ménagée au sein du corps matriciel 15. Le calcul en lui-même est connu de l'homme de l'art est n'est donc pas détaillé plus avant ici. Pour refroidir durant le décollage un générateur électrique équipant un appareil de 150 places environ et équipé de deux ensembles propulsifs, la surface frontale del'échangeur de chaleur est environ de 80in² pour une épaisseur de 3in environ. Le débit d'air maximum traversant l'échangeur de chaleur est environ de 0.45kg/s.Le refroidisseur volumique / surfacique 14 comporte en second lieu un ensemble d'ailettes 18 partant de la surface externe 16 du corps matriciel 15 et formant saillie à la surface externe 16 du corps matriciel.

Ces ailettes 18 agissent comme des surface de guidage du flux d'air, et sont orientées sensiblement parallèlement aux lignes d'écoulement d'un flux d'air circulant sur la surface externe 16 du corps matriciel 15 lorsque l'avion est en vol, c'est à dire sensiblement selon l'axe longitudinal X.

Préférentiellement, les ailettes 18 sont réalisées dans le même matériau que le corps matriciel 15, à la surface duquel elles sont solidarisées par la plus grande partie de leur bord inférieur.

Les dimensions de ces ailettes 18 sont déterminées par le besoin de refroidissement lorsque l'avion est en vol, et par le flux d'air extérieur et la température de l'air circulant le long de la surface de ces ailettes 18. Le détail d'un tel calcul est connu de l'homme de l'art. Pour refroidir en croisière un générateur électrique équipant un appareil de 150 places environ et équipé de deux ensembles propulsifs, la surface d'échange des ailettes est environ de 0.5m², les ailettes ayant une hauteur d'environ 50mm.

De plus, ces ailettes 18 présentent, dans le présent exemple, un profil courbe dans le sens de la surface externe 16 du corps matriciel 15. Les ailettes 18 protègent le corps matriciel 15 et en particulier la surface externe 16 du corps matriciel 15 des impacts externes, par ex. chocs d'oiseaux, du givre etc.

Le dispositif de refroidissement est piloté par une électronique de contrôle 19, (illustrée figure 5), de type connu en soi, dont la fonction principale est le contrôle de la vanne de régulation 12 selon diverses informations d'entrée.

Cette électronique de contrôle 19 reçoit généralement en entrée, comme c'est le cas dans le présent exemple nullement limitatif, des données de température des circuits d'huile que le dispositif de refroidissement doit réguler, ainsi que des données de température d'air extérieur et d'air dans la veine d'air 13. Elle reçoit aussi généralement des informations d'état de la vanne de régulation 12.

Généralement, elle émet également des données de contrôle, par exemple température des circuits d'huile et position de la vanne de régulation, vers le poste de pilotage de l'appareil, dont elle reçoit également des instructions.

Cette électronique de contrôle 19 peut, par exemple, être installée au niveau du propulseur, à proximité immédiate du refroidisseur volumique / surfacique 14. Alternativement, l'électronique de contrôle 19 peut faire partie des divers équipements électroniques situés dans le poste de pilotage, ou être simplement une des fonctions gérées par un des calculateurs multifonctions usuellement présents à bord des aéronefs.

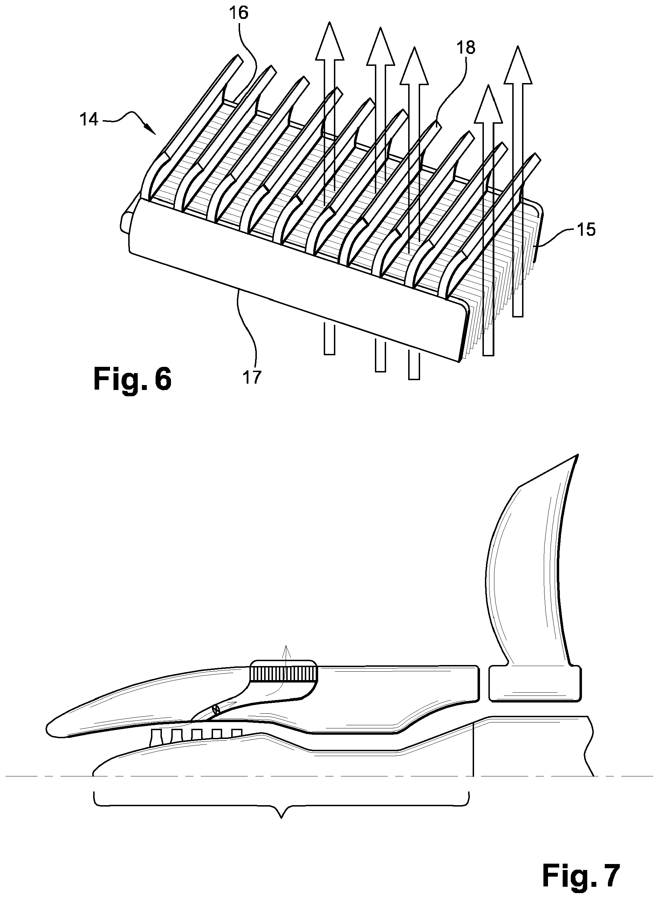

En fonctionnement lorsque l'aéronef est au sol (figures 6 et 7), ou dans les phases de roulage, de décollage ou d'approche, avec les propulseurs en marche, les réjections thermiques de l'ensemble propulsif sont très importantes et la vitesse de l'avion faible ou nulle.

Durant ces phases, le flux d'air extérieur est faible, et insuffisant pour un refroidissement par les seules ailettes 18. L'électronique de commande 19 pilote donc la vanne de régulation 12 en position d'ouverture sensiblement maximale, permettant au corps matriciel 15 d'être parcouru par l'air pressurisé prélevé au niveau du compresseur. Ceci assure ainsi un échange thermique entre le corps matriciel 15 chaud et l'air pressurisé froid, provoquant le refroidissement souhaité du corps matriciel 15 et des fluides circulant à l'intérieur ou reliés à lui par conduction thermique.

Au fur et à mesure de la montée et de l'évolution vers le vol en palier, la vitesse de l'avion augmente et la température extérieure de l'air diminue. En conséquence, le prélèvement d'air au niveau du compresseur est réduit par une fermeture progressive de la vanne de régulation 12, commandée par l'électronique de contrôle 19, et le refroidissement se fait de plus en plus uniquement par les ailettes 18.

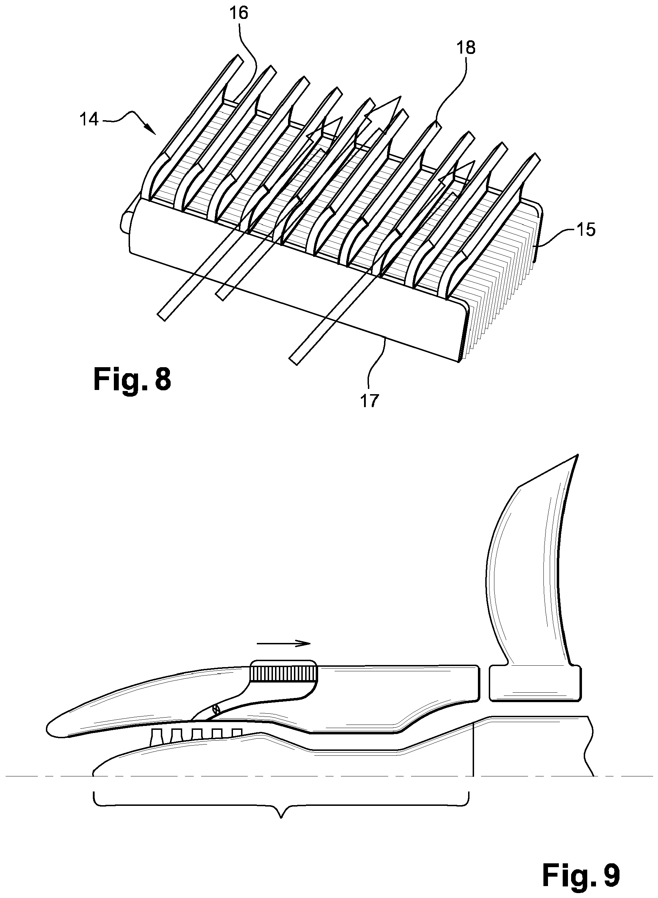

Par la suite, lorsque l'aéronef est en vol stabilisé (figures 8 et 9), le refroidissement est fait normalement par les ailettes externes 18, et la vanne de régulation reste alors fermée, ce qui supprime le prélèvement d'air sur le compresseur, et réduit donc la surconsommation de carburant qu'entraîne autrement ce prélèvement de puissance.

Naturellement, même dans cette phase de vol, dans les cas de conditions particulières (température extérieure élevée, surcharge des générateurs électriques, etc...), il est loisible de commander par l'électronique de contrôle 19, sur la base des informations de température d'huile reçues, une ouverture de la vanne de régulation 12, de manière à faire circuler de l'air dans le corps matriciel, et ainsi à augmenter la capacité de refroidissement globale du dispositif de refroidissement.

Il ressort de la description que le dispositif de refroidissement, permet de refroidir les composants moteur sur toutes les phases de vol tout en permettant l'utilisation d'échangeur surfacique pendant les phases de croisière. La performance aérodynamique du moteur en est ainsi améliorée.

Le fait de gérer l'ouverture de la vanne de régulation 12 en cours de vol permet de piloter le prélèvement de puissance sur le compresseur, et de le réduire dans la mesure du possible, ce qui se traduit en une réduction de consommation.

Par ailleurs, la présente invention tire parti de la présence du compresseur qui permet de fournir l'air pressurisé, sans devoir ajouter de soufflante spécifique dédiée à forcer le passage d'air à travers le corps matriciel. Ceci se traduit par une simplicité accrue du dispositif, ainsi que par un encombrement réduit et une consommation de carburant également réduite.

La portée de la présente invention ne se limite pas aux détails des formes de réalisation ci-dessus considérées à titre d'exemple, mais s'étend au contraire aux modifications à la portée de l'homme de l'art.

En variante, il est possible de remplacer, ou de compléter, le point de prélèvement d'air 11 par une seconde entrée d'air, disposée à l'avant de la nacelle du propulseur, à proximité de l'entrée d'air principale 7. Cette seconde entrée d'air est également dotée d'une vanne de régulation 12'.

Dans le cas d'un remplacement du point de prélèvement d'air 11 par la seconde entrée d'air, une soufflante est intégrée au sein de la nouvelle veine d'air 13' pour fournir un flux d'air de refroidissement suffisant lorsque l'aéronef est au sol.

Au contraire, dans le cas ou la seconde entrée d'air co-existe avec le point de prélèvement d'air 11 sur le compresseur, cette seconde entrée d'air est particulièrement utilisable lorsque la vitesse de l'aéronef est suffisante pour fournir un flux d'air de refroidissement significatif, par exemple au dessus de Mach 0.2. Dans le but de réduire encore le prélèvement de puissance sur le compresseur, il est possible de mitiger les deux sources selon les modes de vol, en modifiant l'électronique de contrôle 19 en conséquence.

Dans une autre variante de réalisation, le corps matriciel 15 peut, selon l'application considérée, comporter des conduits 20, non plus perpendiculaires à sa surface externe 16, mais au contraire inclinés vers l'arrière du propulseur, de manière à réduire la traînée induite par ce corps matriciel 15.

Il a été mentionné dans la description un corps matriciel 15 de forme rectangulaire, arqué. D'autres géométries sont naturellement possibles, en particulier pour tenir compte des disponibilités en termes de volume à proximité de la surface externe 6 de la nacelle du propulseur. Une disposition envisageable comprend plusieurs corps matriciels 15 répartis à intervalles angulaires réguliers autour de la nacelle, de manière à limiter la perturbation créée sur les pales par le flux d'air créé en sortie dudit corps matriciel 15.

Dans une autre variante de mise en oeuvre, alternative à celle exposée précédemment à titre d'exemple et non illustrée, le corps matriciel 15 n'est pas affleurant à la surface externe 6 de la nacelle du propulseur, mais est disposé quelques centimètres sous cette surface, et seules ses ailettes 18 viennent traverser la surface externe 6. Dans ce cas, les conduits 20 sont inclinés et une veine de sortie d'air conduit l'air sortant du corps matriciel 15 vers un point de sortie d'air à la surface externe 6 de la nacelle.

## Revendications

1. Dispositif de refroidissement des fluides d'un propulseur d'aéronef de type dit "propfan", lesdits fluides subissant un échauffement lors du fonctionnement du propulseur, ledit propulseur comportant une turbomachine (8) entraînant en rotation au moins un rotor, ladite turbomachine (8) étant alimentée en air extérieur par une entrée d'air (7) et comportant un compresseur à au moins deux étages, **caractérisé en ce que** ledit dispositif de refroidissement comporte une prise d'air pressurisé (11) qui, une fois le dispositif installé dans la turbomachine, est configurée pour capter de l'air pressurisé par le compresseur, ladite prise d'air comportant une vanne permettant de piloter le flux d'air pressurisé prélevé au niveau de la prise d'air (11), un refroidisseur volumique/surfacique (14), une veine d'air (13) agencée de façon à conduire l'air pressurisé capté vers le refroidisseur, des moyens pour faire circuler un fluide à refroidir dans le refroidisseur volumique / surfacique (14), circuler un fluide à refroidir dans le refroidisseur volumique / surfacique (14),
ledit refroidisseur (14) comportant,
d'une part, un corps matriciel (15) équipé d'une pluralité de conduits (20) pour la circulation d'un agent de refroidissement, lesquels conduits (20) s'étendent d'une première surface (17), dite interne, jusqu'à une seconde surface (16), dite externe, du corps matriciel (15), de telle sorte que le corps matriciel (15) puisse être traversé par l'air pressurisé agissant comme agent de refroidissement,
et, d'autre part, un ensemble d'ailettes (18) s'étendant à partir de la surface externe (16) du corps matriciel (15),
le dispositif étant agencé de telle façon que les ailettes soient placées à l'extérieur du propulseur, et orientées principalement parallèlement au sens d'écoulement de l'air (X) lorsque l'aéronef est en vol.

2. Dispositif de refroidissement (1) selon la revendication 1, **caractérisé en ce que** :
le corps matriciel (15) est dimensionné de manière à suffire à assurer seul le refroidissement souhaité lorsque l'aéronef est à vitesse nulle ou faible, dans des conditions d'environnement préalablement choisies,
les ailettes (18) sont dimensionnées de manière à suffire à assurer seules le refroidissement souhaité lorsque l'aéronef est en vol, dans des conditions d'environnement et de vitesse préalablement choisies.

3. Dispositif de refroidissement (1) selon l'une quelconque des revendications précédentes, **caractérisé en ce que** le corps matriciel (15) du refroidisseur (14) est agencé de façon à former une partie du revêtement externe (6) du propulseur.

4. Dispositif de refroidissement (1) selon l'une quelconque des revendications précédentes, **caractérisé en ce que** la prise d'air pressurisé (11) est disposée en aval du 1^{er} ou du 2^{nd} étage du compresseur d'air de la turbomachine (8).

5. Dispositif de refroidissement (1) selon l'une quelconque des revendications précédentes, **caractérisé en ce qu'**il comprend une entrée d'air additionnelle disposée sensiblement à l'avant du propulseur.

6. Dispositif de refroidissement (1) selon l'une quelconque des revendications précédentes, **caractérisé en ce que** le corps matriciel (15) comporte une pluralité de lamelles délimitant les conduits (20) pour la circulation d'un agent de refroidissement.

7. Dispositif de refroidissement selon l'une quelconque des revendications précédentes, **caractérisé en ce que** les conduits (20) du corps matriciel (15) sont orientés sensiblement perpendiculairement à la surface externe (16) dudit corps matriciel (15).

8. Dispositif de refroidissement (1) selon l'une quelconque des revendications précédentes, **caractérisé en ce qu'**il comporte des moyens de contrôle (19) du flux d'air pressurisé traversant les conduits (20) du corps matriciel (15) du refroidisseur (14), ces moyens étant configurés pour contrôler l'ouverture de la vanne de régulation (12) de la prise d'air.

9. Aéronef comprenant un dispositif selon l'une quelconque des revendications précédentes.

10. Procédé destiné à l'utilisation d'un dispositif selon l'une quelconque des revendications 1 à 8, **caractérisé en ce qu'**il comporte des opérations, lorsque l'aéronef est au sol, de commande de passage d'un flux d'air pressurisé maximum à travers le refroidisseur (14), et, lorsque l'aéronef est en vol, de commande de passage d'un flux d'air réduit ou nul à travers les conduits (20) du corps matriciel (15) du refroidisseur (14).

## Patentansprüche

1. Vorrichtung zum Kühlen von Fluiden eines Flugzeugtriebwerks des sogenannten "Propfan"-Typs, wobei die Fluide während des Betriebs des Triebwerks eine Erwärmung erfahren, wobei das Triebwerk eine Turbomaschine (8) umfasst, die wenigstens einen Rotor rotatorisch antreibt, wobei die Turbomaschine (8) durch einen Luft-einlass (7) mit Außenluft versorgt wird und einen Verdichter mit wenigstens zwei Stufen umfasst,
**dadurch gekennzeichnet, dass** die Kühlungsvorrichtung umfasst: einen Druckluftabgriff (11), der, sobald die Vorrichtung in der Turbomaschine installiert ist, konfiguriert ist, durch den Verdichter mit Druck beaufschlagte Luft zu empfangen, wobei der Luftabgriff ein Ventil enthält, das ermöglicht, den Druckluftstrom, der auf Höhe des Luftabgriffs (11) abgegriffen wird, zu steuern, einen Volumen-/Oberflächenkühler (14), eine Luftleitung (13), die dafür ausgelegt ist, aufgenommene Druckluft zu dem Kühler zu leiten, und Mittel, um ein in dem Volumen-/Oberflächenkühler (14) zu kühlendes Fluid zirkulieren zu lassen,
wobei der Kühler (14) Folgendes umfasst:
einerseits einen Grundkörper (15), der mit mehreren Leitungen (20) für die Zirkulation eines Kühlmittels ausgerüstet ist, wobei sich die Leitungen (20) von einer ersten, sogenannten inneren Oberfläche (17) zu einer zweiten, sogenannten äußeren Oberfläche (16) des Grundkörpers (15) erstrecken, derart, dass sich Druckluft, die als Kühlmittel wirkt, durch den Grundkörper (15) bewegen kann,
und andererseits eine Gesamtheit von Flügeln (18), die sich von der äußeren Oberfläche (16) des Grundkörpers (15) erstrecken,
wobei die Vorrichtung in der Weise beschaffen ist, dass die Flügel außerhalb des Triebwerks angeordnet sind und dann, wenn sich das Flugzeug im Flug befindet, hauptsächlich parallel zu der Strömungsrichtung (X) der Luft orientiert sind.

2. Kühlungsvorrichtung (1) nach Anspruch 1, **dadurch gekennzeichnet, dass**:
der Grundkörper (15) so bemessen ist, dass er allein ausreicht, um die gewünschte Kühlung sicherzustellen, wenn das Flugzeug unter im Voraus gewählten Umgebungsbedingungen eine Geschwindigkeit null oder eine niedrige Geschwindigkeit hat, und
die Flügel (18) so bemessen sind, dass sie allein ausreichen, um die gewünschte Kühlung sicherzustellen, wenn sich das Flugzeug unter im Voraus gewählten Umgebungs- und Geschwindigkeitsbedingungen im Flug befindet.

3. Kühlungsvorrichtung (1) nach einem der vorhergehenden Ansprüche, **dadurch gekennzeichnet, dass** der Grundkörper (15) des Kühlers (14) so beschaffen ist, dass er einen Teil der äußeren Hülle (6) des Triebwerks bildet.

4. Kühlungsvorrichtung (1) nach einem der vorhergehenden Ansprüche, **dadurch gekennzeichnet, dass** der Druckluftabgriff (11) der ersten oder der zweiten Stufe des Luftverdichters der Turbomaschine (8) nachgeschaltet ist.

5. Kühlungsvorrichtung (1) nach einem der vorhergehenden Ansprüche, **dadurch gekennzeichnet, dass** sie einen zusätzlichen Lufteinlass aufweist, der im Wesentlichen vor dem Triebwerk angeordnet ist.

6. Kühlungsvorrichtung (1) nach einem der vorhergehenden Ansprüche, **dadurch gekennzeichnet, dass** der Grundkörper (15) mehrere Lamellen aufweist, die die Leitungen (20 für die Zirkulation eines Kühlmittels begrenzen.

7. Kühlungsvorrichtung nach einem der vorhergehenden Ansprüche, **dadurch gekennzeichnet, dass** die Leitungen (20) des Grundkörpers (15) im Wesentlichen senkrecht zu der äußeren Oberfläche (16) des Grundkörpers (15) orientiert sind.

8. Kühlungsvorrichtung (1) nach einem der vorhergehenden Ansprüche, **dadurch gekennzeichnet, dass** sie Mittel (19) zum Steuern des Druckluftstroms, der sich durch die Leitungen (20) des Grundkörpers (15) des Kühlers (14) bewegt, umfasst, wobei diese Mittel konfiguriert sind, die Öffnung des Regulierungsventils (12) des Luftabgriffs zu steuern.

9. Flugzeug, das eine Vorrichtung nach einem der vorhergehenden Ansprüche umfasst.

10. Verfahren, das für die Verwendung einer Vorrichtung nach einem der Ansprüche 1 bis 8 bestimmt ist, **dadurch gekennzeichnet, dass** es dann, wenn sich das Flugzeug auf dem Boden befindet, die Operation des Steuerns des Durchgangs eines maximalen Druckluftstroms durch das Triebwerk (14) und dann, wenn sich das Flugzeug im Flug befindet, die Operation des Steuerns des Durchgangs eines verringerten Luftstroms oder eines Luftstroms null durch die Leitungen (20) des Körpers (15) der Kühlungseinrichtung (14) umfasst.

## Claims

1. Device for cooling the fluids of a propfan-type aero engine, in which said fluids are heated when the engine is operating, said engine comprising a turbomachine (8) that turns at least one rotor, said turbomachine (8) being supplied with ambient air via an air inlet (7) and comprising a compressor having at least two stages, **characterized in that** said cooling device comprises a pressurized air bleed point (11) which, once the device is installed in the turbomachine, is configured to bleed air pressurized by the compressor, said air bleed point comprising a valve by means of which it is possible to control the flow of pressurized air taken at the air bleed point (11), a volume/surface cooler (14), an air duct (13) arranged so as to convey the bled pressurized air to the cooler, means for circulating a fluid that is to be cooled within the volume/surface cooler (14),
said cooler (14) comprising,
on one hand, a matrix body (15) equipped with a plurality of channels (20) for circulating a coolant, which channels (20) extend from a first, inner surface (17) to a second, outer surface (16) of the matrix body (15) such that the pressurized air, acting as a coolant, can flow through the matrix body (15),
and, on the other hand, a set of fins (18) extending from the outer surface (16) of the matrix body (15),
the device being arranged such that the fins are placed on the outside of the engine and are oriented essentially parallel to the airflow direction (X) when the aircraft is in flight.

2. Cooling device (1) according to Claim 1, **characterized in that**:
the matrix body (15) is dimensioned so as to be sufficient for providing, on its own, the desired cooling when the aircraft speed is low or nil, in previously chosen environmental conditions,
the fins (18) are dimensioned so as to be sufficient for providing, on their own, the desired cooling when the aircraft is in flight, in previously chosen environmental and speed conditions.

3. Cooling device (1) according to any one of the preceding claims, **characterized in that** the matrix body (15) of the cooler (14) is arranged so as to form part of the outer housing (6) of the engine.

4. Cooling device (1) according to any one of the preceding claims, **characterized in that** the pressurized air bleed point (11) is arranged downstream of the 1^{st} or 2^{nd} stage of the air compressor of the turbomachine (8).

5. Cooling device (1) according to any one of the preceding claims, **characterized in that** it comprises an additional air inlet arranged essentially at the front of the engine.

6. Cooling device (1) according to any one of the preceding claims, **characterized in that** the matrix body (15) comprises a plurality of plates delimiting the channels (20) for a coolant to circulate.

7. Cooling device (1) according to any one of the preceding claims, **characterized in that** the channels (20) of the matrix body (15) are oriented essentially perpendicular to the outer surface (16) of said matrix body (15).

8. Cooling device (1) according to any one of the preceding claims, **characterized in that** it comprises means (19) for controlling the flow of pressurized air passing through the channels (20) of the matrix body (15) of the cooler (14), these means being configured to control the opening of the valve (12) controlling the air bleed point.

9. Aircraft comprising a device according to any one of the preceding claims.

10. Method for using a device according to any one of Claims 1 to 8, **characterized in that** it comprises operations, when the aircraft is on the ground, of ordering the passage of a maximum flow of pressurized air through the cooler (14) and, when the aircraft is in flight, of ordering the passage of a reduced or zero flow of air through the channels (20) of the matrix body (15) of the cooler (14).
